(19) Europäisches Patentamt / European Patent Office / Office européen des brevets

(11) **EP 2 638 947 B1**

(12) **EUROPEAN PATENT SPECIFICATION**

(45) Date of publication and mention
of the grant of the patent:
**15.05.2019 Bulletin 2019/20**

(21) Application number: **13155400.8**

(22) Date of filing: **15.02.2013**

(51) Int Cl.:
**B01D 46/24** *(2006.01)*      **F01N 3/022** *(2006.01)*
**B01J 35/04** *(2006.01)*      **B01J 35/10** *(2006.01)*
**F01N 3/20** *(2006.01)*

(54) **HONEYCOMB STRUCTURE AND HONEYCOMB CATALYST**

WABENSTRUKTUR UND WABENFÖRMIGER KATALYSATOR

STRUCTURE EN NID D'ABEILLE ET CORPS CATALYTIQUE EN NID D'ABEILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2012 JP 2012058514**

(43) Date of publication of application:
**18.09.2013 Bulletin 2013/38**

(73) Proprietor: **NGK Insulators, Ltd.**
**Nagoya-city, Aichi 467-8530 (JP)**

(72) Inventor: **MIYAIRI, Yukio**
**Nagoya-city, Aichi 467-8530 (JP)**

(74) Representative: **Mewburn Ellis LLP**
**City Tower**
**40 Basinghall Street**
**London EC2V 5DE (GB)**

(56) References cited:
**EP-A1- 1 985 365     US-A1- 2008 202 080**

**Description**

BACKGROUND OF THE INVENTION

Field of the Invention

The present invention relates to a honeycomb structure and a honeycomb catalyst, and more particularly, it relates to a honeycomb structure which is suitably used as a catalyst carrier for purification of an exhaust gas, and a honeycomb catalyst in which a catalyst is loaded onto such a honeycomb structure.

Background Art

An exhaust gas discharged from an internal combustion engine such as an engine of a car includes nitrogen oxides ($NO_x$). From the viewpoint of an influence on the global environment or the like, purification of the nitrogen oxides included in the exhaust gas is required. For the purification of the nitrogen oxides ($NO_x$), for example, a purifying method using an SCR catalyst is effective. Therefore, for the purification of the exhaust gas discharged from the engine or the like (specifically, the purification of the nitrogen oxides included in the exhaust gas), the SCR catalyst is broadly used. "SCR" is an abbreviation for "selective catalytic reduction". "The SCR catalyst" means a catalyst which selectively reduces components to be purified by a reducing reaction. In particular, an example of the SCR catalyst is a catalyst which selectively reduces the nitrogen oxides.

When the SCR catalyst is used for the purification of the exhaust gas, the SCR catalyst is loaded onto a catalyst carrier and used as a catalyst body sometimes. An example of the catalyst carrier is a honeycomb structure including porous partition walls with which cells are formed to become through channels of a fluid. The loading of the catalyst onto the partition walls of such a honeycomb structure is referred to as catalyst coating sometimes.

As a gas treatment device including such a honeycomb catalyst, for example, a gas treatment device including a flow-through base material and a composite catalyst is suggested (e.g., see Patent Document 1). The above flow-through base material has an inlet axial end, an outlet axial end, elongate wall elements extending from the inlet axial end to the outlet axial end, and a plurality of passages which are partitioned by the wall elements in an axial direction and have open ends. That is, the flow-through base material becomes the above-mentioned honeycomb structure. The composite catalyst includes particles having an average particle diameter in excess of about three microns, and is substantially deposited on the wall elements by wash coating. In the gas treatment device of Patent Document 1, an average roughness of the surface of each of the wall elements substantially does not change even after the catalyst is loaded onto the wall elements.

[Patent Document 1] JP-2010-516466-T

EP 1985365 A1 proposes a honeycomb structure and honeycomb catalyst body having porous partition walls wherein a distribution of pores of the partition walls has two or more peaks with respect to pore capacity in a region where the pore diameter is 0.05 $\mu$m or more.

US 2008/0202080 proposes a honeycomb structure made from a porous ceramic material, wherein the porosity of the material is greater than 10%, and the pore size distribution is of at least bimodal type.

SUMMARY OF THE INVENTION

However, the above conventional honeycomb structure has the following problem with use as a catalyst carrier onto which a catalyst is loaded. First, when the conventional honeycomb structure is used as a catalyst carrier, a catalyst is filled into pores so as to close the pores in partition walls. When the catalyst is filled into the pores, the catalyst can be loaded onto the partition walls without decreasing an open area of cells. However, when the catalyst is filled into the pores of the partition walls so as to close all the pores, an exhaust gas comes in contact with the catalyst only in part of the surfaces of the cells. That is, the exhaust gas passing through the cells cannot sufficiently be diffused in the partition walls, and hence the catalyst filled into the pores cannot sufficiently exert a gas purifying function, which has caused the problem that a purifying performance of a honeycomb catalyst deteriorates.

Moreover, in an SCR catalyst to perform purification of nitrogen oxides and the like, an amount of the SCR catalyst has a very noticeable influence on the purifying performance. Therefore, to enhance the purifying performance by the SCR catalyst, a large amount of the catalyst is required. For example, in the honeycomb catalyst in which the SCR catalyst is loaded onto the partition walls of the honeycomb structure, it is necessary to coat the partition walls with the large amount of the catalyst. However, when the partition walls are coated with the large amount of the catalyst, there occurs the problem that a pressure loss of the honeycomb catalyst increases.

Furthermore, in the honeycomb catalyst in which the catalyst is loaded onto the partition walls of the honeycomb structure, the open area of the cells decreases as much as a thickness of a catalyst coat layer, and hence an open area ratio of the honeycomb structure decreases. This further causes the problem that the increase of the pressure loss is incurred.

Additionally, in Patent Document 1, a method of filling the catalyst into the pores of the partition walls is disclosed. However, the method disclosed in Patent Document 1 has the problem that a sufficient amount of the catalyst cannot be filled into the pores of the partition walls.

The present invention has been developed in view of the above-mentioned problems, and an object thereof is to provide a honeycomb structure which is suitably used as a catalyst carrier for purification of an exhaust gas, and a honeycomb catalyst in which a catalyst is loaded onto such a honeycomb structure.

According to the present invention, there are provided a honeycomb structure and a honeycomb catalyst as follows.

[1] A honeycomb structure comprising porous partition walls with which there are formed a plurality of cells extending from one end surface to the other end surface to become through channels of a fluid, wherein in the partition walls, there are formed large pores which show one distribution in a graph illustrating a pore diameter distribution of the partition walls and in which a pore diameter PP1 at a maximum peak value of pore volumes of the one distribution is in a range of 12 $\mu$m or more to 60 $\mu$m, and small pores which show the other distribution in the graph illustrating the pore diameter distribution of the partition walls and in which a pore diameter PP2 at a maximum peak value of pore volumes of the other distribution is smaller than the pore diameter PP1, the pore diameter PP1 and the pore diameter PP2 satisfy a relation of the following equation (1), and a ratio of the pore volume of the pores having pore diameters smaller than the pore diameter PP2 to a total pore volume of the partition walls is 0.5% or more and 7% or less.

$$0.91 \leq (PP1-PP2)/PP1 \leq 0.98 \quad ... \quad (1),$$

in which PP1 is the pore diameter PP1 ($\mu$m) at the maximum peak value of the pore volumes of the one distribution, and PP2 is the pore diameter PP2 ($\mu$m) at the maximum peak value of the pore volumes of the other distribution.

[2] The honeycomb structure according to the above [1], wherein a thickness of each of the partition walls is from 50.8 to 254 $\mu$m.

[3] The honeycomb structure according to the above [1] or [2], wherein a cell density of the honeycomb structure is from 15.5 to 108.5 cells/cm$^2$.

[4] The honeycomb structure according to any one of the above [1] to [3], wherein a material of the partition walls contains at least one selected from the group consisting of cordierite, aluminum titanate, silicon carbide, and mullite.

[5] A honeycomb catalyst comprising the honeycomb structure according to any one of the above [1] to [4], and an SCR catalyst which selectively reduces components to be purified.

[6] The honeycomb catalyst according to the above [5], wherein the SCR catalyst is a catalyst which selectively reduces nitrogen oxides.

A honeycomb structure of the present invention includes porous partition walls with which there are formed a plurality of cells extending from one end surface to the other end surface to become through channels of a fluid. Moreover, in the partition walls, two types of pores are formed, i.e., there are formed large pores showing one distribution in a graph illustrating a pore diameter distribution of the partition walls, and small pores showing the other distribution in the graph illustrating the pore diameter distribution of the partition walls. In the large pores, a pore diameter PP1 at a maximum peak value of pore volumes of the one distribution is in a range of 12 $\mu$m to 60 $\mu$m. Moreover, in the small pores, a pore diameter PP2 at a maximum peak value of pore volumes of the other distribution is smaller than the pore diameter PP1.

In the honeycomb structure of the present invention, the pore diameter PP1 and the pore diameter PP2 satisfy a relation of the above equation (1). Furthermore, in the honeycomb structure of the present invention, a ratio of a pore volume of the pores having pore diameters smaller than the pore diameter PP2 to a total pore volume of the partition walls is 0.5% or more and 7% or less. Since the above equation (1) is satisfied, in the above-mentioned graph illustrating the pore diameter distribution of the partition walls, the pore diameter PP1 is far different from the pore diameter PP2 as compared with a conventional honeycomb structure. That is, a difference between the large pore and the small pore becomes clear. Therefore, when the honeycomb structure of the present invention is used as a catalyst carrier and a catalyst is loaded onto the partition walls of this honeycomb structure, the catalyst can preferentially be filled into the large pores of the partition walls. In other words, the catalyst is not easily filled into the small pores, and through these small pores, diffusion of a fluid passing through cells of the honeycomb structure can be promoted. For example, the above-mentioned fluid comes in contact with the catalyst filled into the large pores, through the small pores, and hence a purifying performance of the catalyst can suitably be exerted. Moreover, since the ratio of the pore volume of the pores having the pore diameters smaller than the pore diameter PP2 to the total pore volume of the partition walls is 0.5% or more and 7% or less, it is possible to sufficiently acquire the volume of the large pores into which the catalyst is filled. In consequence, the honeycomb structure of the present invention can suitably be used as the catalyst carrier for purification of an exhaust gas.

Moreover, a honeycomb catalyst of the present invention is a catalyst carrier in which a catalyst is loaded onto the above-mentioned honeycomb structure of the present invention. As described above, when the catalyst is loaded onto the honeycomb structure, the catalyst is preferentially filled into large pores of partition walls. Furthermore, when a fluid passes through cells of the honeycomb catalyst, the fluid suitably comes in contact with the catalyst filled into the large pores, through small pores, and hence a suitable purifying performance can be realized.

BRIEF DESCRIPTION OF THE DRAWINGS

Fig. 1 is a perspective view schematically showing one embodiment of a honeycomb structure of the present invention;
Fig. 2 is a plan view schematically showing one end surface side of the embodiment of the honeycomb structure of the present invention;
Fig. 3 is a cross sectional view schematically showing a cross section of the embodiment of the honeycomb structure of the present invention which is parallel to an extending direction of cells;
Fig. 4 is an enlarged schematic view of an area A shown in Fig. 3;
Fig. 5 is a graph illustrating one example of a pore diameter distribution of partition walls in the embodiment of the honeycomb structure of the present invention;
Fig. 6 is a schematic view showing that partition walls shown in Fig. 4 are coated with a catalyst;
Fig. 7 is a schematic view showing a honeycomb catalyst obtained by the catalyst coating shown in Fig. 6;
Fig. 8 is a schematic view showing a honeycomb catalyst in which a catalyst is loaded onto a conventional honeycomb structure;
Fig. 9 is a perspective view schematically showing one embodiment of a honeycomb catalyst of the present invention;
Fig. 10 is a plan view schematically showing one end surface side of the embodiment of the honeycomb catalyst of the present invention;
Fig. 11 is a cross sectional view schematically showing a cross section of the embodiment of the honeycomb catalyst of the present invention which is parallel to an extending direction of cells;
Fig. 12 is a cross sectional view schematically showing a cross section taken along the line B-B' of Fig. 11; and
Fig. 13 is an enlarged schematic view of an area C shown in Fig. 11.

DESCRIPTION OF THE PREFERRED EMBODIMENTS

Hereinafter, embodiments of the present invention will specifically be described with reference to the drawings. It should be understood that the present invention is not limited to the following embodiments and that modifications, improvements and the like suitably added to the following embodiments based on the ordinary knowledge of a person skilled in the art without departing from the gist of the present invention are also included in the scope of the present invention.

(1) Honeycomb Structure:

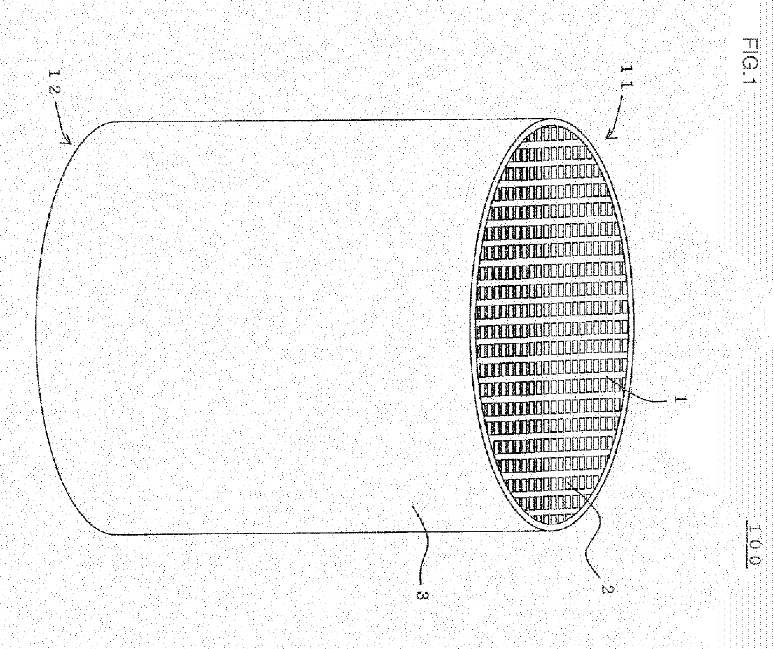

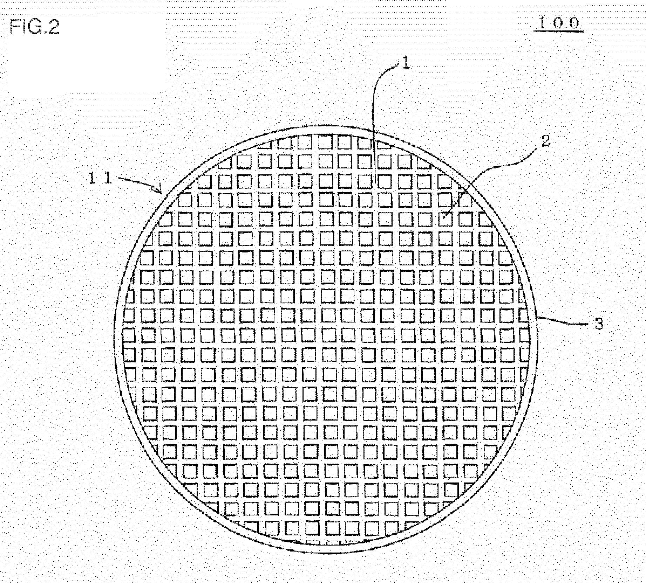

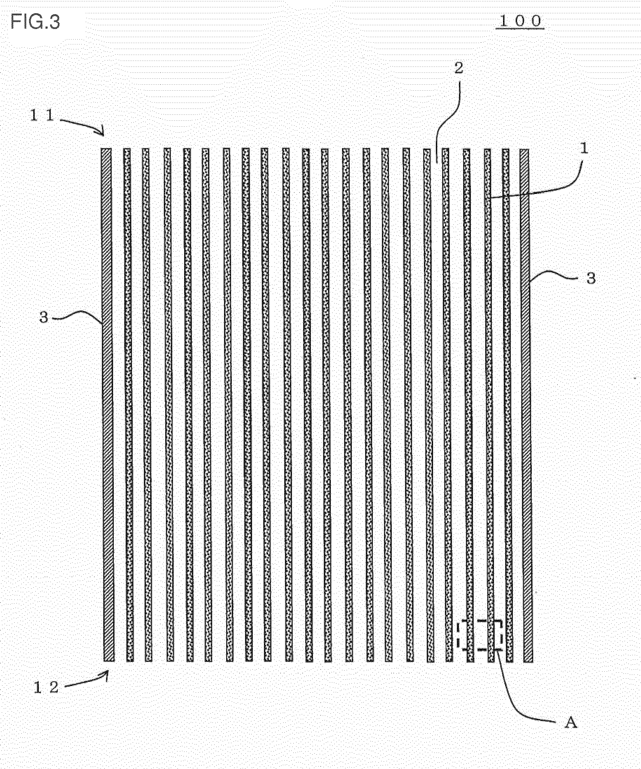

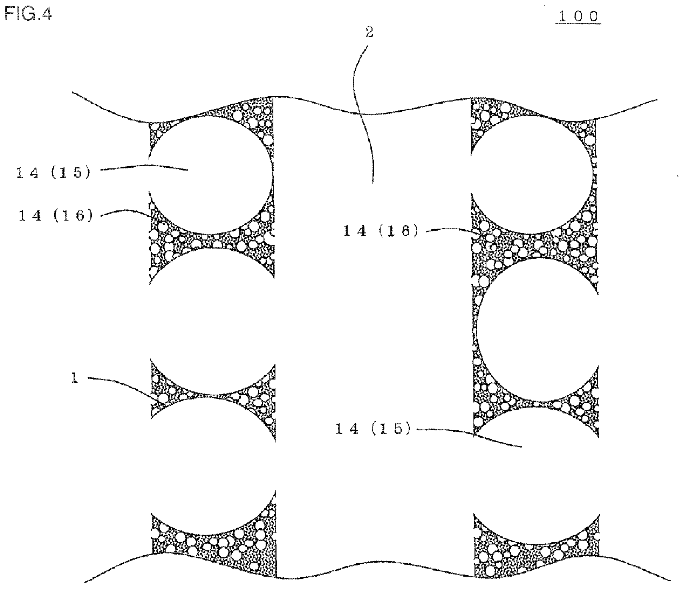

First, one embodiment of a honeycomb structure of the present invention will be described. The honeycomb structure of the present embodiment is a honeycomb structure 100 shown in Fig. 1 to Fig. 4. The honeycomb structure 100 of the present embodiment includes porous partition walls 1 with which there are formed a plurality of cells 2 extending from one end surface 11 to the other end surface 12 to become through channels of a fluid. The honeycomb structure 100 shown in Fig. 1 to Fig. 3 further includes an outer peripheral wall 3 positioned in an outermost periphery of the structure. The honeycomb structure 100 has a tubular shape including the partition walls 1 and the outer peripheral wall 3. Fig. 1 is a perspective view schematically showing the one embodiment of a honeycomb structure of the present invention. Fig. 2 is a plan view schematically showing one end surface side of the embodiment of the honeycomb structure of the present invention. Fig. 3 is a cross sectional view schematically showing a cross section of the embodiment of the honeycomb structure of the present invention which is parallel to an extending direction of the cells. Fig. 4 is an enlarged schematic view of an area A shown in Fig. 3.

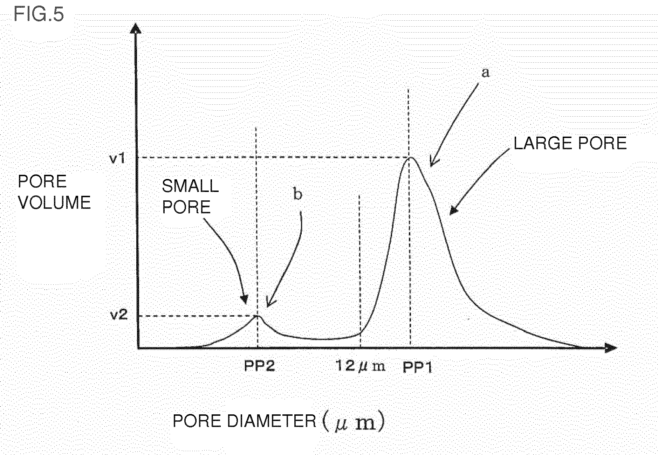

In the partition walls 1 of the honeycomb structure 100 of the present embodiment, there are formed large pores 15 which show one distribution a (see Fig. 5) in a graph (e.g., see Fig. 5) illustrating a pore diameter distribution of the partition walls 1, and small pores 16 which show the other distribution b (see Fig. 5) in the graph (e.g., see Fig. 5) illustrating the pore diameter distribution of the partition walls 1, i.e., two types of pores 14 are formed. Here, Fig. 5 is the graph illustrating one example of the pore diameter distribution of the partition walls in the embodiment of the honeycomb structure of the present invention. As shown in Fig. 5, in the large pores 15, a pore diameter PP1 at a maximum peak value v1 of pore volumes of the one distribution a is 12 $\mu$m or more. Furthermore, according to the presently claimed invention, this pore diameter should be no larger than 60 $\mu$m. Moreover, in the small pores 16, a pore diameter PP2 at a maximum peak value v2 of pore volumes of the other distribution b is smaller than the pore diameter PP1.

The honeycomb structure of the present embodiment can suitably be used as a catalyst carrier for purification of an exhaust gas. In the honeycomb structure of the present embodiment, the pore diameter PP1 and the pore diameter PP2 satisfy a relation of the following equation (1). Furthermore, in the honeycomb structure of the present embodiment, a ratio of the pore volume of the pores having pore diameters smaller than the pore diameter PP2 to a total pore volume of the partition walls is 0.5% or more and 7% or less.

$$0.91 \leq (PP1-PP2)/PP1 \leq 0.98 \quad \dots \quad (1),$$

in which PP1 is the pore diameter PP1 ($\mu$m) at the maximum peak value v1 of the pore volumes of the one distribution a, and PP2 is the pore diameter PP2 ($\mu$m) at the maximum peak value v2 of the pore volumes of the other distribution b.

Since the above equation (1) is satisfied, in the graph illustrating the pore diameter distribution of the partition walls as shown in Fig. 5, the pore diameter PP1 is far different from the pore diameter PP2 as compared with a conventional honeycomb structure. That is, in the honeycomb structure 100 shown in Fig. 4, a difference between the large pore 15 and the small pore 16 becomes clear. Therefore, when the honeycomb structure 100 shown in Fig. 1 to Fig. 4 is used as the catalyst carrier and a catalyst is loaded onto the partition walls 1 of the honeycomb structure 100, the catalyst can preferentially be filled into the large pores 15 of the partition walls 1. In other words, the partition walls can be coated with the catalyst so that the catalyst is not filled into spaces of the small pores 16. In consequence, the fluid passing through the cells 2 of the honeycomb structure 100 can be guided into the small pores, and diffusion of the fluid can be promoted through the small pores 16. For example, the above-mentioned fluid comes in contact with the catalyst filled into the large pores 15, through the small pores 16, and hence a contact efficiency between this fluid and the catalyst can be increased. Consequently, in the honeycomb structure 100 of the present embodiment, the fluid passing through the cells 2 is suitably diffused into the partition walls 1 through the small pores 16, and hence a purifying performance of the catalyst loaded onto the partition walls 1 can suitably be exerted.

Moreover, when the ratio of the pore volume of the pores having the pore diameters smaller than the pore diameter PP2 to the total pore volume of the partition walls 1 is 0.5% or more and 7% or less, it is possible to sufficiently acquire the volume of the large pores 15 into which the catalyst is filled. Hereinafter, "the ratio of the pore volume of the pores having the pore diameters smaller than the pore diameter PP2 to the total pore volume of the partition walls 1" will be referred to as "the pore volume ratio of the pore diameter PP2 or less" sometimes. "The total pore volume of the partition walls 1" and "a pore volume of the pores having the pore diameters smaller than the pore diameter PP2" are values measured by mercury porosimetry. When the pore volume ratio of the pore diameter PP2 or less is smaller than 0.5%, the small pores through which the fluid is diffused noticeably decrease. On the other hand, when the pore volume ratio of the pore diameter PP2 or less is in excess of 7%, the small pores into which the catalyst is not filled excessively increase, and hence an amount of the catalyst which can be filled into the pores decreases. When the pore volume ratio of the pore diameter PP2 or less is smaller than 0.5% or in excess of 7%, the purifying performance of the catalyst cannot sufficiently be exerted.

Hereinafter, the constitution of the honeycomb structure 100 of the present embodiment will be described in more detail.

In the partition walls 1 of the honeycomb structure 100 of the present embodiment, two roughly divided types of pores 14 having different sizes are formed. That is, in the partition walls 1, there are formed "the large pores 15" having large pore diameters, and "the small pores 16" having pore diameters smaller than those of the large pores 15. In the graph illustrating the pore diameter distribution of the partition walls as shown in Fig. 5, the large pores show the one distribution a, and the pore diameter PP1 at the maximum peak value v1 of the pore volumes of the one distribution a is 12 $\mu$m or more. Furthermore, according to the presently claimed invention, this pore diameter should be no larger than 60 $\mu$m. Moreover, in the graph illustrating the pore diameter distribution of the partition walls as shown in Fig. 5, the small pores show the other distribution b, and the pore diameter PP2 at the maximum peak value v2 of the pore volumes of the other distribution b is smaller than the pore diameter PP1. The other distribution b indicating the small pores is a distribution which is different from the one distribution a indicating the large pores.

As described above, when the pore diameter distribution of the partition walls is shown as the graph in the honeycomb structure of the present embodiment, the graph illustrates a bimodal distribution as shown in Fig. 5. The pore diameter distribution is also referred to as the fine pore diameter distribution. The pore diameter distribution can be measured by the mercury porosimetry. For example, the pore diameter distribution of the partition walls can be measured with a mercury porosimeter. An example of the mercury porosimeter is Autopore 9500 (trade name) manufactured by Micromeritics Co.

The pore diameter distribution of the present invention is a pore diameter distribution at a time when the pore diameters of the partition walls which are measured by the mercury porosimetry are shown by common logarithms. The pore diameter distribution can be illustrated in, for example, a graph in which the abscissa indicates the pore diameters (the common logarithm: $\mu$m), and the ordinate indicates a log differential pore volume (cc/g).

In the pore diameter distribution shown in Fig. 5, a distribution having a peak on a side of large pore diameters (i.e., the one distribution a) is the distribution indicating the large pores. On the other hand, in the pore diameter distribution shown in Fig. 5, a distribution having a peak on a side of small pore diameters (i.e., the other distribution b) is the distribution indicating the small pores.

"The maximum peak value v1 of the pore volumes in the large pore distribution (i.e., the one distribution a)" means the value of the peak of the distribution showing the maximum value of the pore volumes in the distribution on the side of the larger pore diameters which is a part of the pore diameter distribution as the bimodal distribution. "The maximum peak value v2 of the pore volumes in the small pore distribution (i.e., the other distribution b)" means the value of the peak of the distribution showing the maximum value of the pore volumes in the distribution on the side of the smaller pore diameters which is the other part of the pore diameter distribution as the bimodal distribution. Moreover, "the pore diameter at the maximum peak value" means the value of the pore diameter at the peak (the maximum peak value) of the distribution at which the pore volume indicates the maximum value. That is, there is meant the value of the pore diameter at the peak of the distribution at which the log differential pore volume indicates the maximum value, in the graph illustrating the pore diameter distribution in which the abscissa indicates the pore diameter and the ordinate indicates the log differential pore volume.

As shown in Fig. 4, in the honeycomb structure 100 of the present embodiment, the small pores 16 are formed over the whole partition walls 1. Moreover, in the partition walls 1 in which the small pores 16 are formed, the large pores 15 having larger pore diameters are further formed. That is, the honeycomb structure 100 of the present embodiment has a fine pore structure where the large pores 15 are surrounded with an area in which the small pores 16 are formed. In other words, it can be considered that this fine pore structure is a structure where the large pores 15 having clearly larger pore diameters than the small pores 16 are formed in a base material of the partition walls 1 in which ultrafine pores (i.e., the small pores 16) having remarkably small pore diameters are formed. A large number of the small pores 16 (the ultrafine pores) are present in the partition walls 1, and hence the small pores communicate with one another. Furthermore, at least one of the small pores 16 which communicate with one another also communicates with the large pore 15.

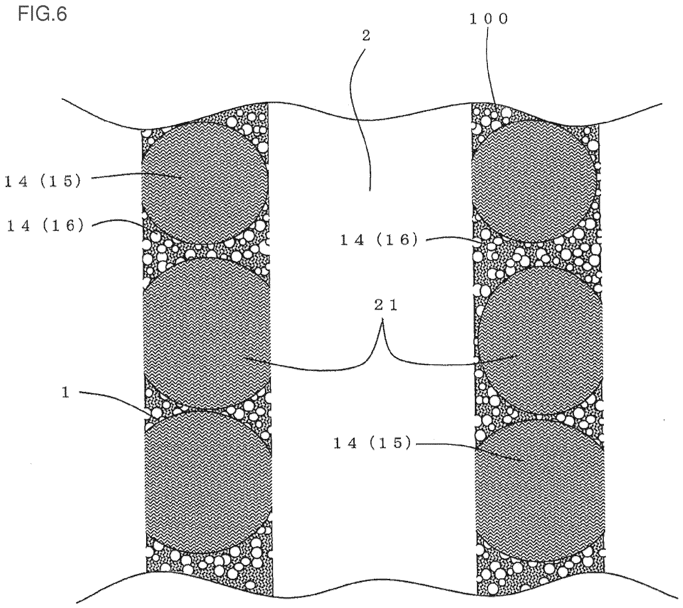

In the honeycomb structure 100 of the present embodiment, when the partition walls 1 are coated with a catalyst slurry 21 as shown in Fig. 6, the catalyst slurry 21 can preferentially be filled into the large pores 15 of the partition walls 1. Hereinafter, the coating of the partition walls 1 with the catalyst slurry 21 will be referred to as "the catalyst coating" sometimes. In this catalyst coating, a viscosity of the catalyst slurry 21 and particle diameters of the catalyst included in the catalyst slurry 21 are adjusted, so that the catalyst slurry 21 is not filled into the small pores 16 having small pore diameters, and the catalyst slurry 21 can be filled only into the large pores 15. In the honeycomb structure 100 of the present embodiment, the relation of the above equation (1) is satisfied, and hence the pore diameters of the large pores 15 are far different from those of the small pores 16. Therefore, as described above, the catalyst slurry 21 can preferentially be filled into the large pores 15, and the catalyst slurry 21 can be prevented from being filled into the small pores 16.

When a value of "(PP1-PP2)/PP1" in the above equation (1) is, for example, smaller than 0.91, it is remarkably difficult to adjust the catalyst slurry 21, and it becomes remarkably difficult to fill the catalyst slurry 21 only into the large pores 15. For example, the catalyst slurry is also filled into the small pores 16, and conversely, the catalyst slurry 21 is not filled into the small pores 16 as well as the large pores 15 sometimes. Therefore, as shown in Fig. 6, the catalyst slurry 21 cannot be filled only into the large pores 15, and a large part of the catalyst slurry 21 is deposited on the surfaces of the partition walls 1. On the other hand, when the value of "(PP1-PP2)/PP1" is in excess of 0.98, the pore diameters of the small pores 16 relatively become excessively small as compared with the pore diameters of the large pores, and hence the fluid does not easily pass through the small pores 16. In the honeycomb structure 100 of the present embodiment, the catalyst slurry 21 is not filled into the small pores 16, and hence the fluid is diffused into the partition walls 1 through the small pores 16, to enhance a contact efficiency between the fluid and the catalyst. Consequently, when the fluid does not easily pass through the small pores 16, it becomes difficult to enhance the above-mentioned contact efficiency. Here, Fig. 6 is a schematic view showing that the partition walls shown in Fig. 4 are coated with the catalyst.

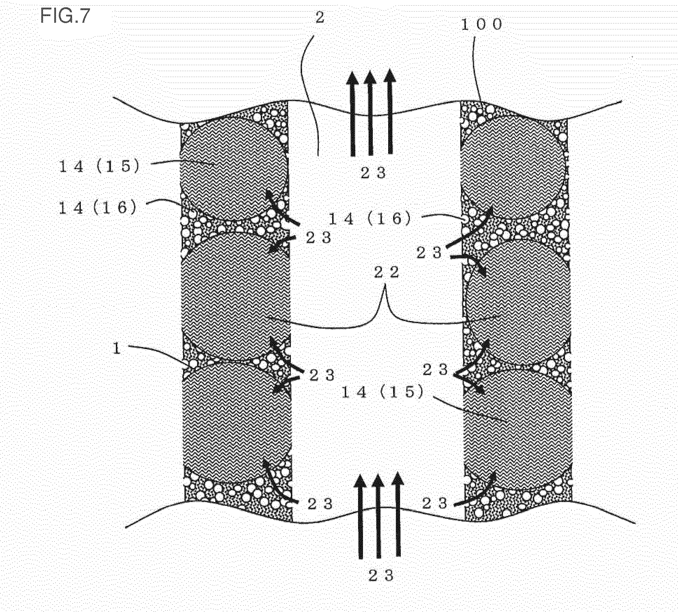

As shown in, for example, Fig. 6, when the catalyst coating is performed in a state where the catalyst slurry 21 is preferentially filled into the large pores 15 and the catalyst slurry 21 is hardly filled into the small pores 16, it is possible to obtain a honeycomb catalyst shown in Fig. 7. Fig. 7 is a schematic view showing the honeycomb catalyst obtained by the catalyst coating shown in Fig. 6. Here, the honeycomb catalyst is a honeycomb catalyst in which the catalyst is loaded onto the partition walls of the honeycomb structure.

As shown in Fig. 7, when a fluid 23 passes through the cell 2 partitioned by the partition walls 1, on the surfaces of the partition walls 1, the fluid 23 comes in contact with a catalyst 22 filled into the large pores 15. Furthermore, the fluid 23 flows into the small pores 16 through the surfaces of the partition walls 1, and is diffused into the partition walls 1. Then, the fluid 23 which has reached the large pores 15 through the small pores 16 comes in contact with the catalyst 22 filled into the large pores 15. In Fig. 7, the arrows 23 indicate the flow of the fluid.

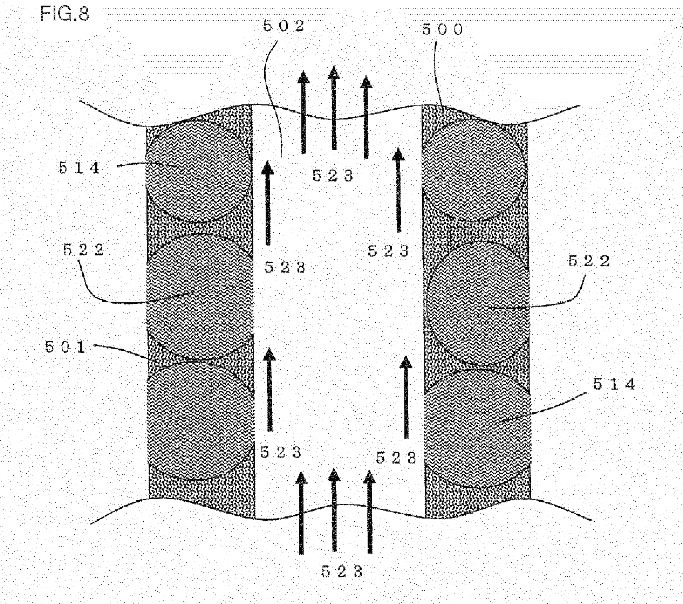

As shown in, for example, Fig. 8, in a honeycomb catalyst in which a catalyst 522 is loaded onto a honeycomb structure 500 having only large pores 514 formed in partition walls 501, a fluid 523 passing through a cell 502 can only come in contact with the catalyst 522 which is present on the surfaces of the partition walls 501. That is, any small pores extending through the partition walls 501 are not present, and hence the catalyst 522 comes in contact with the fluid 523 exclusively in open frontal portions of the large pores 514. Consequently, in the conventional honeycomb structure 500, the fluid 523 is not sufficiently diffused to the catalyst 522 filled into the pores of the partition walls 501 (the large pores 514 in Fig. 8), which causes the problem that the catalyst 522 filled into the pores cannot sufficiently exert a gas purifying function. Here, Fig. 8 is a schematic view showing the honeycomb catalyst in which the catalyst is loaded onto the conventional honeycomb structure.

Moreover, although not shown in the drawing and as described above, when the value of the "(PP1-PP2)/PP1" in the above equation (1) is smaller than 0.91, a difference in pore diameter between the large pore and the small pore decreases. Therefore, when the catalyst is filled into the large pores, the catalyst is also easily filled into the small pores. When the catalyst is filled into both the large pore and the small pore in this manner, the fluid cannot be diffused through the small pores, and the fluid can only come in contact with the catalyst which is present on the surfaces of the partition walls.

The value of "(PP1-PP2)/PP1" in the above equation (1) needs to be 0.91 or more, but is preferably 0.93 or more, and further preferably 0.95 or more. Moreover, the value of "(PP1-PP2)/PP1" in the above equation (1) needs to be 0.98 or less, but is preferably 0.97 or less, and further preferably 0.96 or less. According to such a constitution, the catalyst is not easily filled into the small pores, and the fluid is easily diffused through the small pores.

Moreover, in the honeycomb structure of the present embodiment, "the pore volume ratio of the pore diameter PP2 or less" is 0.5% or more, preferably 2% or more, and further preferably 4% or more. "The pore volume ratio of the pore diameter PP2 or less" is 7% or less, preferably 6.5% or less, and further preferably 6% or less. According to such a constitution, a ratio between the large pore into which the catalyst is actually filled and the small pore through which the fluid is diffused further becomes suitable, and the purifying performance of the catalyst can further suitably be exerted.

In the honeycomb structure 100 of the present embodiment shown in Fig. 1 to Fig. 4, a porosity of the partition walls 1 is preferably from 45 to 70%, further preferably from 50 to 65%, and especially preferably from 51 to 60%. According to such a constitution, it is possible to sufficiently acquire a volume of the large pores into which the catalyst is substantially filled. The porosity is a value measured by the mercury porosimetry. "The porosity of the partition walls 1" means the porosity obtained from the volume of the pores 14 including all of the large pores 15 and the small pores 16 formed in the partition walls 1. For example, the porosity of the partition walls 1 can be measured with the mercury porosimeter. An example of the mercury porosimeter is Autopore 9500 (trade name) manufactured by Micromeritics Co.

Moreover, in the honeycomb structure 100 of the present embodiment, the pore diameter PP1 at the maximum peak value v1 of the pore volumes in the distribution of the large pores is in a range of 12 $\mu$m to 60 $\mu$m, in the graph (e.g., see Fig. 5) illustrating the pore diameter distribution of the partition walls 1. Hereinafter, "the pore diameter PP1 at the maximum peak value v1 of the pore volumes in the distribution of the large pores" will be referred to simply as "the pore diameter PP1 at the maximum peak value v1 of the large pores" or "the pore diameter PP1" sometimes. The pore diameter PP1 is preferably in a range of 20 to 35 $\mu$m.

Moreover, the pore diameter PP2 at the maximum peak value v2 of the pore volumes in the distribution of the small pores is smaller than the above PP1. The pore diameter PP2 is determined by a relation between the pore diameter PP1 and the pore diameter PP2 in the above equation (1). Hereinafter, "the pore diameter PP2 at the maximum peak value v2 of the pore volumes in the distribution of the small pores" will be referred to simply as "the pore diameter PP2 at the maximum peak value v2 of the small pores" or "the pore diameter PP2" sometimes.

Moreover, in the honeycomb structure of the present embodiment, a thickness of each of the partition walls is preferably from 50.8 to 254 $\mu$m, further preferably 50.8 to 150 $\mu$m, and especially preferably from 50.8 to 125 $\mu$m. When the thickness of each of the partition walls is in the above numeric range, the large pores and small pores can suitably be formed in the partition walls of the honeycomb structure. Moreover, a pressure loss can be decreased while maintaining a strength of the partition walls.

"The thickness of each of the partition walls" means the thickness of a wall (the partition wall) with which two adjacent cells are formed, in a cross section of the honeycomb structure which is cut perpendicularly to the extending direction of the cells. "The thickness of each of the partition walls" can be measured by, for example, an image analysis device (trade name "NEXIV, VMR-1515" manufactured by Nikon Co.).

In the honeycomb structure of the present embodiment, a cell density of the honeycomb structure is preferably from 15.5 to 108.5 cells/cm$^2$. When the cell density is in the above numeric range, the increase of the pressure loss can effectively be prevented. Moreover, when the catalyst is loaded onto the partition walls of the honeycomb structure, a high purifying performance can be obtained. The cell density of the honeycomb structure means the number of the cells per unit area in the cross section of the honeycomb structure which is orthogonal to the cell extending direction. The cell density of the honeycomb structure is further preferably from 46.5 to 77.5 cells/cm$^2$, and especially preferably from 46.5 to 70 cells/cm$^2$.

Moreover, a material of the partition walls of the honeycomb structure preferably contains at least one selected from the group consisting of cordierite, aluminum titanate, silicon carbide, and mullite. In particular, the partition walls of the honeycomb structure more preferably contain at least one selected from the above group as a main component. According to such a constitution, thermal expansion of the honeycomb structure can be decreased, and a resistance to heat shock of the honeycomb structure can be enhanced. Examples of components other than the main component include alumina, silica, titania, and glass.

In the present description, "the main component" means a component included as much as 90 mass% or more in constituent materials. The partition walls are further preferably constituted of a material containing 95 mass% or more, and are especially preferably constituted of a material containing 98 mass% or more of at least one selected from the above group.

There is not any special restriction on a shape of the honeycomb structure. Examples of the shape of the honeycomb structure include a tubular shape in which end surfaces of the honeycomb structure are circular (the cylindrical shape), a tubular shape in which the end surfaces are oval, and a tubular shape in which the end surfaces are polygonal. Examples of the polygonal shape include a quadrangular shape, a pentangular shape, a hexagonal shape, a heptagonal shape, and an octagonal shape. Fig. 1 to Fig. 3 show an example where the shape of the honeycomb structure is the tubular shape in which the end surfaces are circular.

Examples of a shape of each of the cells in the cross section of the honeycomb structure which is orthogonal to the cell extending direction include a quadrangular shape, a hexagonal shape, an octagonal shape, a circular shape, and a combination of these shapes. As the quadrangular shape, a square shape or a rectangular shape is preferable.

The honeycomb structure 100 shown in Fig. 1 further includes the outer peripheral wall 3 positioned in the outermost periphery of the honeycomb structure. The honeycomb structure 100 of the present embodiment does not have to include the outer peripheral wall 3. The outer peripheral wall 3 may be formed together with the partition walls 1, when a formed honeycomb body is extruded in a process of preparing the honeycomb structure 100. Moreover, at the extrusion-forming, any outer peripheral walls do not have to be formed. For example, the outer peripheral wall 3 can be formed by applying a ceramic material to an outer peripheral part of the partition walls 1 with which the cells 2 are formed.

(2) Manufacturing Method of Honeycomb Structure:

Next, a manufacturing method of the honeycomb structure of the present embodiment will be described. An example of the manufacturing method of the honeycomb structure of the present embodiment is a manufacturing method including a kneaded material preparing step, a forming step, and a firing step.

In the manufacturing method of the honeycomb structure of the present embodiment, particle diameters of forming raw materials are preferably regulated to sizes in a predetermined range by sieving or the like. When such particulate forming raw materials of particles having the regulated sizes is used, it is possible to form the partition walls having small pores originating from the forming raw materials and having the regulated pore diameters. The "small pores originating from the forming raw materials and having the regulated pore diameters" become "the small pores" in the honeycomb structure of the present embodiment.

Moreover, to the above-mentioned forming raw materials, a pore former is added. Particle diameters of the pore former are also preferably regulated to sizes in a predetermined range by the sieving or the like. When such a pore former is added to the forming raw materials, the large pores are formed in the partition walls. Hereinafter, the manufacturing method of the honeycomb structure of the present embodiment will be described every step.

(2-1) Kneaded Material Preparing Step:

First, when the honeycomb structure of the present embodiment is manufactured, the forming raw materials containing a ceramic raw material are mixed and kneaded to obtain a kneaded material (the kneaded material preparing step). As the ceramic raw material, a cordierite forming raw material, cordierite, aluminum titanate, silicon carbide, mullite or the like can be used. Additionally, the cordierite forming raw material is a ceramic raw material blended to obtain a chemical composition which falls in a range of 42 to 56 mass% of silica, 30 to 45 mass% of alumina, and 12 to 16 mass% of magnesia. The cordierite forming raw material is fired to become cordierite.

Moreover, the forming raw materials are preferably prepared by further mixing the above ceramic raw material with a dispersion medium, the pore former, an organic binder, an inorganic binder, a surfactant and the like. There is not any special restriction on a composition ratio of each of the raw materials, and the composition ratio is preferably set in accordance with a constitution, a material or the like of the honeycomb structure to be prepared.

As the ceramic raw material, fine particles having small particle diameters are used to decrease the sizes of the pores formed by the ceramic raw material itself. Furthermore, as described above, the particle diameters are preferably regulated to the sizes in the predetermined range by the sieving or the like. Additionally, it is very difficult to form the small pores having such pore diameters as to satisfy the above equation (1) by use of a known pore former, and hence it is preferable to use the ceramic raw material obtained by further sieving the particles having small particle diameters as described above.

The pore former to be added to the ceramic raw material is a pore former for large pores which mainly forms the large pores. The pore former for large pores can form the large pores in the honeycomb structure of the present embodiment, when a formed body of the kneaded material is fired. Particle diameters of the pore former for large pores can suitably be selected in accordance with the pore diameters of the large pores in the obtained honeycomb structure. For example, the pore former having an average particle diameter of 50 $\mu$m or more is preferably used. Examples of the pore former for large pores include resin particles, carbon, and starch. An amount of the pore former for large pores to be added is preferably adjusted so that the partition walls of the finally obtained honeycomb structure satisfy the above equation (1) and so that the ratio of the pore volume of the pores having the pore diameters smaller than the pore diameter PP2 to the total pore volume of the partition walls is 0.5% or more and 7% or less.

As the dispersion medium, water can be used. An amount of the dispersion medium is preferably from 10 to 30 parts by mass to 100 parts by mass of the ceramic raw material.

As the organic binder, there is preferably used methylcellulose, hydroxypropyl methylcellulose, hydroxypropyl ethyl cellulose, hydroxyethyl cellulose, carboxymethylcellulose, polyvinyl alcohol, or a combination of these binders. Moreover, an amount of the organic binder to be added is preferably from 3 to 8 parts by mass to 100 parts by mass of the ceramic raw material.

As the surfactant, ethylene glycol, dextrin, fatty acid soap, polyalcohol or the like can be used. One of these surfactants may be used alone, or two or more of the surfactants may be used as a combination. An amount of the surfactant to be added is preferably from 0.2 to 0.5 part by mass to 100 parts by mass of the ceramic raw material.

There is not any special restriction on a method of kneading the forming raw materials to form the kneaded material, and an example of the method is a method using a kneader, a vacuum kneader or the like.

(2-2) Forming Step:

Next, the obtained kneaded material is formed into a honeycomb shape to obtain a formed honeycomb body (the forming step). There is not any special restriction on a method of forming the kneaded material to obtain the formed honeycomb body. An example of a method of obtaining the formed honeycomb body is a known forming method such as extrusion-forming or injection-forming. A suitable example of the method is a method of obtaining the formed honeycomb body by the extrusion-forming using a die having desirable cell shape, partition wall thickness and cell density. As a material of the die, a hard metal which does not easily wear down is preferable.

There is not any special restriction on a shape of the formed honeycomb body, and a cylindrical shape, a tubular shape in which end surfaces are elliptic, a tubular shape in which each of the end surfaces has a polygonal shape such as "a square shape, a rectangular shape, a triangular shape, a pentangular shape, a hexagonal shape or an octagonal shape", or the like is preferable.

(2-3) Firing Step:

Next, the obtained formed honeycomb body is dried, and fired, to obtain a honeycomb structure including porous partition walls with which a plurality of cells are formed to become through channels of a fluid (the firing step). In the partition walls of the obtained honeycomb structure, there are formed the small pores originating from the ceramic raw material as the forming raw material and having very small pore diameters, and the large pores formed by using the pore former for large pores.

There is not any special restriction on a drying method, and examples of the drying method include hot air drying, microwave drying, dielectric drying, reduced-pressure drying, vacuum drying, and freeze-drying. Among these methods, the dielectric drying, the microwave drying or the hot air drying is preferably performed alone, or a combination of the methods is preferably performed.

Prior to firing the formed honeycomb body, this formed honeycomb body is preferably calcinated. The calcinating is performed for degreasing. There is not any special restriction on the calcinating, as long as at least part of organic materials (the organic binder, the surfactant, the pore former and the like) in the formed honeycomb body can be removed. In general, a burning temperature of the organic binder is from about 100 to 300°C. Therefore, as calcinating conditions, heating in an oxidizing atmosphere at a temperature of about 200 to 1000°C for about ten to 100 hours is preferable.

In the firing of the formed honeycomb body, the forming raw material constituting the calcinated formed body is sintered and densified. By such firing, the partition walls obtain a predetermined strength. Firing conditions can suitably be selected in accordance with a type of the forming raw material. That is, as a firing temperature, a firing time, a firing atmosphere and the like, suitable conditions may be selected in accordance with the type of the forming raw material. For example, when the cordierite forming raw material is used, the firing temperature is preferably from 1350 to 1440°C. Moreover, as the firing time, a time to keep the highest temperature is preferably from three to ten hours. There is not any special restriction on a device which performs the calcinating and firing. Examples of the device which performs the calcinating and firing include an electric furnace, and a gas furnace.

(3) Honeycomb Catalyst:

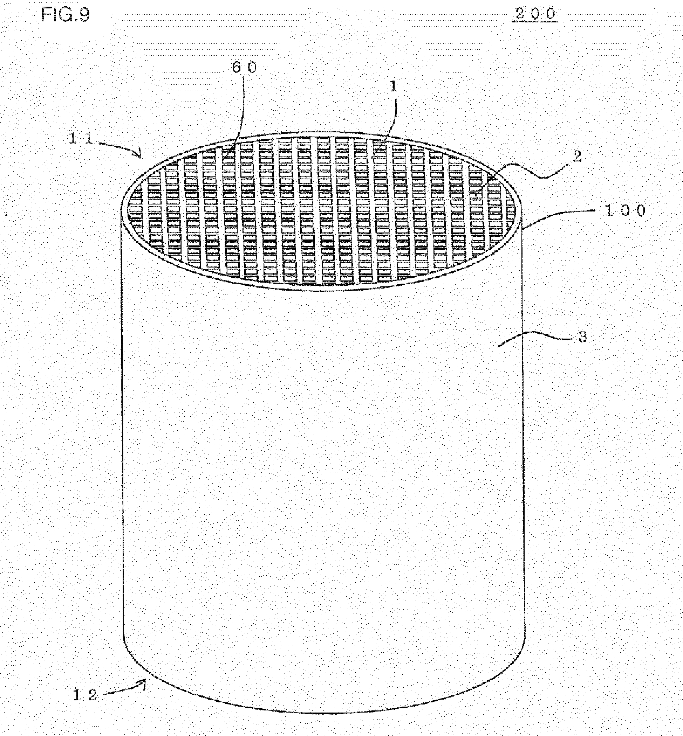

Next, one embodiment of a honeycomb catalyst of the present invention will be described. The honeycomb catalyst of the present embodiment is a honeycomb catalyst 200 shown in Fig. 9 to Fig. 13. The honeycomb catalyst 200 of the present embodiment includes the honeycomb structure 100 of the present invention described above, and an SCR catalyst 60 which selectively reduces components to be purified. The honeycomb structure 100 is a catalyst carrier in the honeycomb catalyst 200.

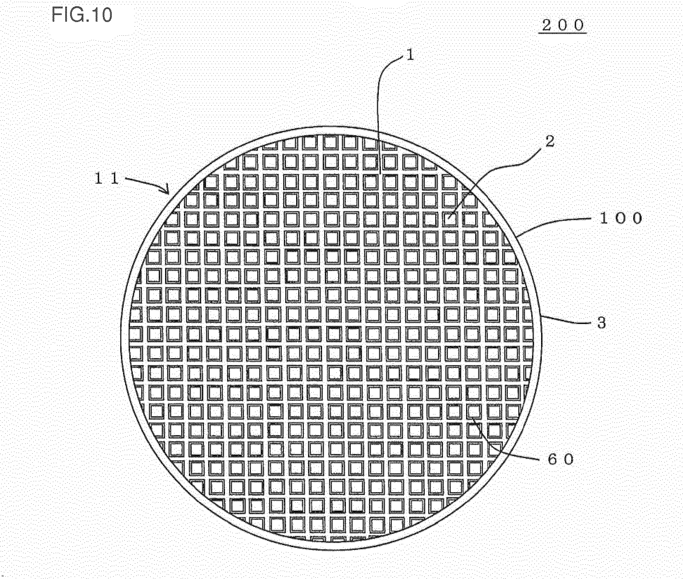

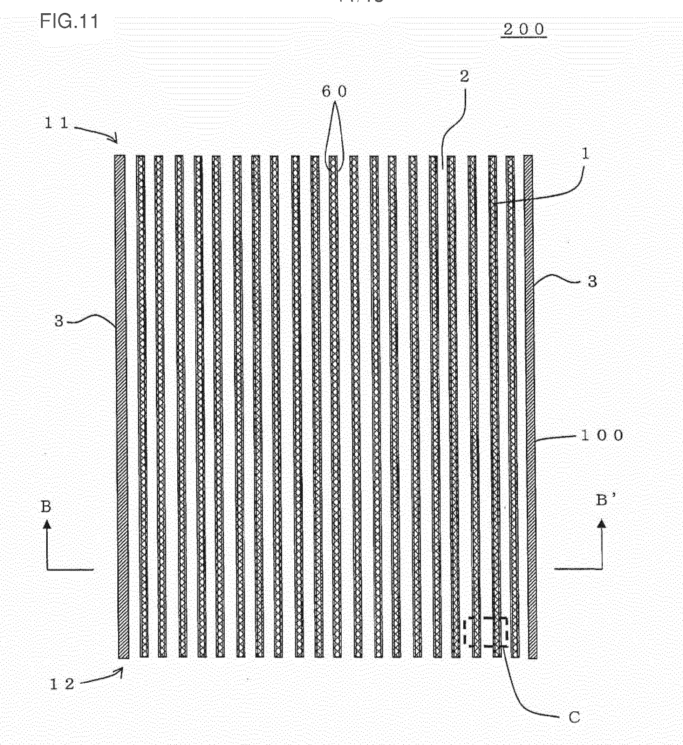

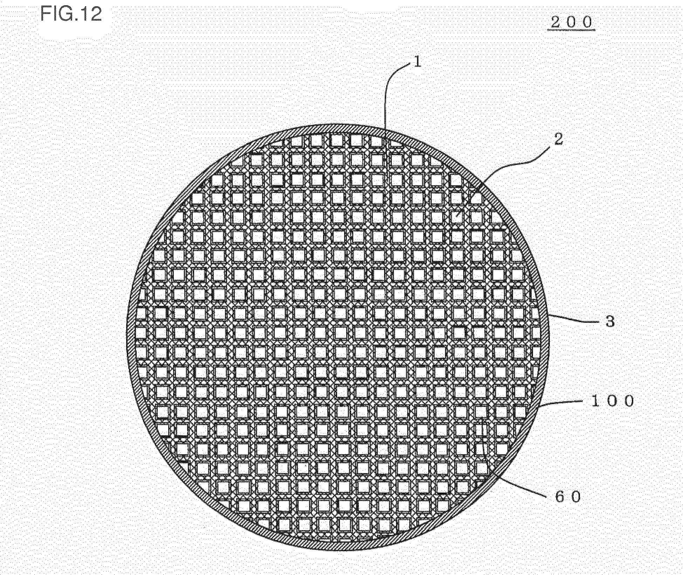

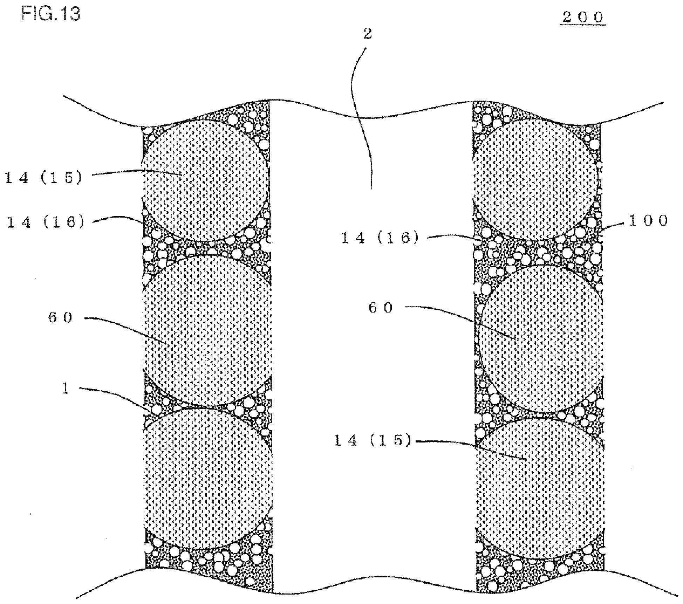

Here, Fig. 9 is a perspective view schematically showing one embodiment of the honeycomb catalyst of the present invention. Fig. 10 is a plan view schematically showing one end surface side of the embodiment of the honeycomb catalyst of the present invention. Fig. 11 is a cross sectional view schematically showing a cross section of the embodiment of the honeycomb catalyst of the present invention which is parallel to an extending direction of cells. Fig. 12 is a cross sectional view schematically showing a cross section taken along the line B-B' of Fig. 11. Fig. 13 is an enlarged schematic view of an area C shown in Fig. 11.

The honeycomb structure 100 includes porous partition walls 1 with which a plurality of cells 2 extending from one end surface 11 to the other end surface 12 are formed to become through channels of a fluid. The honeycomb structure 100 shown in Fig. 9 to Fig. 12 further includes an outer peripheral wall 3 positioned in an outermost periphery of the structure. The honeycomb structure 100 has a tubular shape including the partition walls 1 and the outer peripheral wall 3. A constitution of the honeycomb structure 100 has been described in the embodiment of the honeycomb structure of the present invention.

In the honeycomb catalyst 200 of the present embodiment shown in Fig. 9 to Fig. 13, the SCR catalyst 60 is filled into pores 14 formed in the partition walls 1 of the honeycomb structure 100. In particular, the SCR catalyst 60 is preferentially filled into large pores 15 formed in the partition walls 1. Moreover, although not shown in the drawing, the SCR catalyst 60 may be disposed on the surfaces of the partition walls 1. However, the SCR catalyst 60 preferably is not filled into small pores 16 formed in the partition walls 1. Hereinafter, "the SCR catalyst 60 is filled into the pores 14 of the partition walls 1" and "the SCR catalyst 60 is disposed on the surfaces of the partition walls 1" are generically referred to as "the SCR catalyst 60 is loaded onto the partition walls 1" sometimes.

The SCR catalyst is a catalyst which selectively reduces the components to be purified. Especially in the honeycomb catalyst of the present embodiment, the SCR catalyst is preferably an SCR catalyst for selective reduction of NOx which selectively reduces nitrogen oxides (NOx) in an exhaust gas. A suitable example of the SCR catalyst for selective reduction of NOx is a catalyst which selectively reduces NOx in an exhaust gas from a diesel engine to purify the exhaust gas.

An example of the SCR catalyst is a metal-substituted zeolite. Examples of a metal for the metal-substituted zeolite include iron (Fe) and copper (Cu). A suitable example of the zeolite is a beta zeolite.

Moreover, the SCR catalyst may be a catalyst which contains, as a main component, at least one selected from the group consisting of vanadium and titania. A content of vanadium or titania in the SCR catalyst is preferably 60 mass% or more.

There is not any special restriction on an amount of the SCR catalyst to be loaded onto the partition walls. Hereinafter, the amount of the SCR catalyst to be loaded onto the partition walls will be referred to as "the amount of the catalyst to be loaded" sometimes. The amount (g/L) of the catalyst to be loaded per unit volume of the honeycomb structure is preferably 200 g/L or more. According to such a constitution, the components to be purified can suitably be purified. An upper limit of the amount (g/L) of the SCR catalyst to be loaded is preferably, for example, 400 g/L. When the amount of the SCR catalyst to be loaded is in excess of 400 g/L, the amount of the SCR catalyst is so large that a pressure loss increases sometimes. Therefore, the amount of the SCR catalyst to be loaded is more preferably from 200 to 350 g/L, and especially preferably from 200 to 300 g/L.

As described above, the small pores and the large pores are formed in the partition walls of the honeycomb structure for use in the honeycomb catalyst of the present embodiment. When the SCR catalyst is loaded onto the partition walls of the honeycomb structure, the partition walls are coated with a catalyst slurry including the SCR catalyst. In this case, a viscosity of the catalyst slurry or particle diameters of the catalyst included in the catalyst slurry are preferably adjusted so that the catalyst slurry is mainly filled into the large pores. For example, when the viscosity of the catalyst slurry is increased, the catalyst slurry is not easily filled into the pores having small pore diameters. Moreover, when the particle diameters of the SCR catalyst included in the catalyst slurry are larger than the pore diameters, the catalyst slurry is not filled into the pores substantially. When physical properties in the catalyst slurry are controlled in this manner, the catalyst slurry can preferentially be filled into the large pores.

As described above, in the honeycomb catalyst of the present embodiment, the SCR catalyst preferably is not filled into the small pores. Even if the SCR catalyst is filled into the small pores, a ratio of a volume of the SCR catalyst filled into the pores of a pore diameter PP2 or less to a total volume of the pores of the pore diameter PP2 or less is preferably 30% or less, and further preferably 20% or less. The ratio of the volume of the SCR catalyst filled into the pores of the pore diameter PP2 or less to the total volume of the pores of the pore diameter PP2 or less is most preferably 0%. That is, it is the most preferable that the SCR catalyst is not filled into the pores of the pore diameter PP2 or less.

A manufacturing method of the honeycomb catalyst of the present embodiment is as follows. First, the honeycomb structure as the catalyst carrier onto which the SCR catalyst is to be loaded is prepared. Next, the SCR catalyst is loaded onto the partition walls of the obtained honeycomb structure, to prepare the honeycomb catalyst. A method of preparing the honeycomb structure can be performed in conformity to the above-mentioned method of manufacturing the embodiment of the honeycomb structure of the present invention.

A method of loading the SCR catalyst onto the honeycomb structure to prepare the honeycomb catalyst can be performed in conformity to a method of loading the SCR catalyst in a manufacturing method of a conventional honeycomb catalyst. However, when the catalyst slurry including the SCR catalyst is prepared, the catalyst slurry is preferably prepared by taking, into consideration, values of a pore diameter PP1 and the pore diameter PP2 in the partition walls of the honeycomb structure.

For example, when a viscosity of the catalyst slurry is adjusted, the viscosity of the catalyst slurry can be controlled by regulating a ratio of a water content in the catalyst slurry. The viscosity of the catalyst slurry can suitably be determined in accordance with the values of the pore diameters PP1 and PP2, but the viscosity is, for example, preferably from 2 to 7 mPa•s, further preferably from 2 to 6 mPa•s, and especially preferably from 2 to 5 mPa•s.

Moreover, the particle diameters of the SCR catalyst included in the catalyst slurry are preferably from 1 to 20 $\mu$m, further preferably from 2 to 15 $\mu$m, and especially preferably from 3 to 6 $\mu$m. When the catalyst slurry including the SCR catalyst having such particle diameters is prepared, penetration of the catalyst slurry into the small pores of the partition walls can effectively be suppressed.

Moreover, when the partition walls of the honeycomb structure are coated with the catalyst slurry, the honeycomb structure is contained in a container, and the catalyst slurry is preferably introduced into this container. Prior to introducing the catalyst slurry into the container, air is further preferably evacuated from the container to contain the honeycomb structure. When the air is evacuated from the container, a larger amount of the catalyst slurry is filled into the pores of the partition walls.

After coating the partition walls of the honeycomb structure with the catalyst slurry, the catalyst slurry is dried. Furthermore, the dried catalyst slurry may be fired. In this way, the honeycomb catalyst of the present embodiment can be manufactured.

Examples

Hereinafter, the present invention will further specifically be described with reference to examples, but the present invention is not limited to these examples.

(Example 1)

First, a honeycomb structure for use in a honeycomb catalyst was prepared. As a ceramic raw material to prepare the honeycomb structure, a cordierite forming raw material was used. To the cordierite forming raw material, a dispersion medium, an organic binder and a dispersant were added, to prepare a kneaded material to be formed. An amount of the dispersion medium to be added was 35 parts by mass to 100 parts by mass of the cordierite forming raw material. An amount of the organic binder to be added was 6 parts by mass to 100 parts by mass of the cordierite forming raw material. An amount of the dispersant to be added was 0.5 part by mass to 100 parts by mass of the cordierite forming raw material. As the dispersion medium, water was used. As the organic binder, hydroxypropyl methylcellulose was used. As the dispersant, ethylene glycol was used.

As the cordierite forming raw material, there was used a material containing 38.9 parts by mass of talc, 40.7 parts by mass of kaolin, 5.9 parts by mass of alumina and 11.5 parts by mass of boehmite. An average particle diameter of talc was 2 $\mu$m. An average particle diameter of kaolin was 2 $\mu$m. An average particle diameter of alumina was 1 $\mu$m. An average particle diameter of boehmite was 0.5 $\mu$m. The average particle diameter was a median diameter (d50) in a particle diameter distribution of the respective raw material particles. As the respective raw material particles of the above cordierite forming raw material, particles having comparatively small particle diameters and having uniform particle diameters were used.

Moreover, to 100 parts by mass of this cordierite forming raw material, 10 parts by mass of a pore former for large pores to form the large pores was added. As the pore former for large pores, water-absorbing resin particles having an average particle diameter of 70 $\mu$m were used.

Next, the obtained kneaded material was extruded by using a die to obtain a formed honeycomb body. In this way, the formed honeycomb body was prepared. Then, the formed honeycomb body was dried with a microwave drier. Both end surfaces of the dried formed honeycomb body were cut into predetermined dimensions. Afterward, the formed honeycomb body was further dried with a hot air drier.

The dried formed honeycomb body was fired at 1445°C for five hours. In this way, the honeycomb structure was prepared. The honeycomb structure had a cylindrical shape having an end surface diameter of 228 mm and a length of 112 mm in a cell extending direction. A partition wall thickness of the honeycomb structure was 152.4 $\mu$m. A cell density of the honeycomb structure was 46.5 cells/cm$^2$. A porosity of the honeycomb structure was 52%. The porosity was a value measured with "Autopore III 9420 (trade name)" manufactured by Micromeritics Co. Table 1 shows the end surface diameter, length and material of the honeycomb structure of Example 1. Moreover, Table 1 shows the partition wall thickness, cell density and porosity of the honeycomb structure of Example 1.

Moreover, when a pore diameter distribution of the partition walls was measured, the pore diameter distribution was a bimodal distribution. That is, in the partition walls of the obtained honeycomb structure, large pores and small pores were formed. A pore diameter PP1 at a maximum peak value v1 of a pore volume of the large pores was 12.0 $\mu$m. Moreover, a pore diameter PP2 at a maximum peak value v2 of a pore volume of the small pores was 1.00 $\mu$m. Therefore, a value of "(PP1-PP2)/PP1" of the honeycomb structure of Example 1 was 0.917. Table 1 shows the values of "the pore diameter PP1", "the pore diameter PP2" and "(PP1-PP2)/PP1" of the honeycomb structure of Example 1.

Furthermore, a total pore volume of the partition walls of Example 1 and a pore volume of pores having pore diameters smaller than the pore diameter PP2 were measured. From measurement results, "a pore volume ratio of the pore diameter smaller than PP2" was obtained. The pore volume ratio of the pore diameter PP2 or less was 3%. "The pore volume ratio of the pore diameter smaller than PP2" is the ratio of the pore volume of the pores having the pore diameters smaller than the pore diameter PP2 to the total pore volume of the partition walls. Table 1 shows "the pore volume ratio of the pore diameter smaller than PP2".

[Table 1]

| | Honeycomb structure | | | | | | | | | | Amount of SCR catalyst to be loaded | NOx purification ratio |
|---|---|---|---|---|---|---|---|---|---|---|---|---|
| | Dia. of end surface (mm) | Length (mm) | Material | Partition wall thickness (µm) | Cell density (cells/cm²) | Porosity (%) | Pore dia. Distribution Pore dia. PP1 (µm) | Pore dia. PP2 (µm) | (PP1-PP2)/PP1 | Pore volume ratio of pore dia. smaller than PP2 (%) | (g/L) | (%) |
| Example 1 | 228 | 112 | Cordierite | 152.4 | 46.5 | 52 | 12.0 | 1.00 | 0.917 | 3.0 | 220 | 82 |
| Example 2 | 228 | 112 | Cordierite | 152.4 | 46.5 | 52 | 12.0 | 0.50 | 0.958 | 4.0 | 220 | 81 |
| Example 3 | 228 | 112 | Cordierite | 152.4 | 46.5 | 52 | 12.0 | 0.30 | 0.975 | 3.0 | 220 | 85 |
| Example 4 | 228 | 112 | Cordierite | 152.4 | 46.5 | 52 | 20.0 | 1.50 | 0.925 | 6.0 | 220 | 88 |
| Example 5 | 228 | 112 | Cordierite | 152.4 | 46.5 | 52 | 20.0 | 0.80 | 0.960 | 5.0 | 220 | 85 |
| Example 6 | 228 | 112 | Cordierite | 152.4 | 46.5 | 52 | 20.0 | 0.50 | 0.975 | 5.0 | 220 | 79 |
| Example 7 | 228 | 112 | Cordierite | 152.4 | 46.5 | 52 | 25.0 | 2.00 | 0.920 | 6.0 | 220 | 85 |
| Example 8 | 228 | 112 | Cordierite | 152.4 | 46.5 | 52 | 25.0 | 1.00 | 0.960 | 3.0 | 220 | 88 |
| Example 9 | 228 | 112 | Cordierite | 152.4 | 46.5 | 52 | 25.0 | 0.60 | 0.976 | 4.0 | 220 | 83 |
| Example 10 | 228 | 112 | Cordierite | 152.4 | 46.5 | 52 | 30.0 | 2.50 | 0.917 | 4.0 | 220 | 86 |
| Example 11 | 228 | 112 | Cordierite | 152.4 | 46.5 | 52 | 30.0 | 1.50 | 0.950 | 3.0 | 220 | 87 |
| Example 12 | 228 | 112 | Cordierite | 152.4 | 46.5 | 52 | 30.0 | 1.00 | 0.967 | 6.0 | 220 | 87 |

(continued)

| | Honeycomb structure | | | | | | | | | | Amount of SCR catalyst to be loaded | NO$_x$ purification ratio |
|---|---|---|---|---|---|---|---|---|---|---|---|---|
| | | | | | | | Pore dia. Distribution | | (PP1-PP2) /PP1 | Pore volume ratio of pore dia. smaller than PP2 (%) | | |
| | Dia. of end surface (mm) | Length (mm) | Material | Partition wall thickness (μm) | Cell density (cells/cm$^2$) | Porosity (%) | Pore dia. PP1 (μm) | Pore dia.PP2 (μm) | | | (g/L) | (%) |
| Example 13 | 228 | 112 | Cordierite | 152.4 | 46.5 | 52 | 30.0 | 0.90 | 0.970 | 5.0 | 220 | 85 |
| Comp. Exam. 1 | 228 | 112 | Cordierite | 152.4 | 46.5 | 52 | 20.0 | 2.00 | 0.900 | 5.0 | 220 | 69 |
| Comp. Exam. 2 | 228 | 112 | Cordierite | 152.4 | 46.5 | 52 | 20.0 | 0.20 | 0.990 | 6.0 | 220 | 65 |
| Comp. Exam. 3 | 228 | 112 | Cordierite | 152.4 | 46.5 | 52 | 30.0 | 3.20 | 0.893 | 4.0 | 220 | 68 |
| Comp. Exam. 4 | 228 | 112 | Cordierite | 152.4 | 46.5 | 52 | 30.0 | 0.50 | 0.983 | 5.0 | 220 | 69 |
| Comp. Exam. 5 | 228 | 112 | Cordierite | 152.4 | 46.5 | 52 | 25.0 | 2.00 | 0.920 | 8.0 | 220 | 70 |
| Comp. Exam. 6 | 228 | 112 | Cordierite | 152.4 | 46.5 | 52 | 25.0 | 2.00 | 0.920 | 15.0 | 220 | 55 |
| Comp. Exam. 7 | 228 | 112 | Cordierite | 152.4 | 46.5 | 52 | 25.0 | 2.00 | 0.920 | 0.3 | 220 | 49 |

Moreover, an SCR catalyst was loaded onto the honeycomb structure of Example 1, to prepare the honeycomb catalyst. As the SCR catalyst, a Cu-substituted zeolite was used. As a method of loading the SCR catalyst, an immersion method was used. Specifically, first, a catalyst slurry including the Cu-substituted zeolite was prepared. As the dispersant of the catalyst slurry, water was used. Moreover, when this catalyst slurry was prepared, a viscosity of the catalyst slurry was adjusted so that this catalyst slurry was not filled into the small pores of the partition walls. The viscosity of the catalyst slurry for use in the honeycomb structure of Example 1 was adjusted to 5 mPa·s. The honeycomb structure of Example 1 was immersed into the catalyst slurry prepared in this manner and including the SCR catalyst for 15 seconds or more. Afterward, the honeycomb structure was removed from the catalyst slurry, and the excess catalyst slurry which adhered to the honeycomb structure was blown with air, and removed. Afterward, this honeycomb structure was dried with hot air at 120°C, to prepare the honeycomb catalyst.

An amount of the SCR catalyst to be loaded onto the honeycomb catalyst using the honeycomb structure of Example 1 was 220 g/L. The amount (g/L) of the SCR catalyst to be loaded is shown in Table 1.

Next, an $NO_x$ purification ratio of the obtained honeycomb catalyst was measured by the following method. Results are shown in Table 1.

[$NO_x$ Purification Ratio]

The prepared honeycomb catalyst was mounted on an exhaust system of a vehicle of two liter displacement on which a gasoline engine was mounted. An operation was performed in a regulated operation mode (LA-4) of the U.S. regulation (FTP), and an exhaust gas was allowed to flow into the honeycomb catalyst, to measure $NO_x$ concentrations in an inlet side end surface and an outlet side end surface of the honeycomb catalyst. The $NO_x$ purification ratio was calculated from the $NO_x$ concentration of the inlet side end surface and the $NO_x$ concentration of the outlet side end surface.

(Examples 2 to 13)

In Examples 2 to 13, honeycomb structures were prepared so that a pore diameter PP1 at a maximum peak value v1 of a pore volume of large pores and a pore diameter PP2 at a maximum peak value v2 of a pore volume of small pores were values shown in Table 1. Table 1 shows values of "the pore diameter PP1", "the pore diameter PP2" and "(PP1-PP2)/PP1" of each of the honeycomb structures of Examples 2 to 13. Moreover, Table 1 shows "a pore volume ratio of the pore diameter smaller than PP2" of each of the honeycomb structures of Examples 2 to 13.

In Example 2, the honeycomb structure was prepared by a method similar to Example 1, except that an average particle diameter of talc was 1.5 μm, an average particle diameter of kaolin was 2 μm, and an average particle diameter of alumina was 0.5 μm.

In Example 3, the honeycomb structure was prepared by a method similar to Example 1, except that an average particle diameter of talc was 1 μm, an average particle diameter of kaolin was 1 μm, and an average particle diameter of alumina was 0.3 μm.

In Example 4, the honeycomb structure was prepared by a method similar to Example 1, except that particle diameters of a cordierite forming raw material were selected by sieving and regulation was made so that a size of the pore diameter PP2 was a value shown in Table 1.

In Examples 5 and 6, the honeycomb structures were prepared by a method similar to Example 1, except that an average particle diameter of a pore former for large pores was 100 μm, particle diameters of a cordierite forming raw material were suitably selected by sieving and regulation was made so that a size of the pore diameter PP2 was a value shown in Table 1.

In Examples 7 to 9, the honeycomb structures were prepared by a method similar to Example 1, except that an average particle diameter of a pore former for large pores was 130 μm, particle diameters of a cordierite forming raw material were suitably selected by sieving and regulation was made so that a size of the pore diameter PP2 was a value shown in Table 1.

In Examples 10 to 13, the honeycomb structures were prepared by a method similar to Example 1, except that an average particle diameter of a pore former for large pores was 160 μm, particle diameters of a cordierite forming raw material were suitably selected by sieving and regulation was made so that a size of the pore diameter PP2 was a value shown in Table 1.

An SCR catalyst was loaded onto each of the honeycomb structures obtained in Examples 2 to 13, to prepare a honeycomb catalyst. An amount of the SCR catalyst to be loaded was 220 g/L similarly to Example 1. In Examples 2 and 3, similarly to Example 1, the SCR catalyst was loaded by using a catalyst slurry having a viscosity of 5 mPa·s. In Examples 4 to 6, the SCR catalyst was loaded by using a catalyst slurry having a viscosity of 4 mPa·s. In Examples 7 to 9, the SCR catalyst was loaded by using a catalyst slurry having a viscosity of 3.5 mPa·s. In Examples 10 to 13, the SCR catalyst was loaded by using a catalyst slurry having a viscosity of 2 mPa·s.

NO$_x$ purification ratios were measured by using the obtained honeycomb catalysts by a method similar to Example 1. Results are shown in Table 1.

(Comparative Examples 1 to 7)

In Comparative Examples 1 to 7, a honeycomb structure was prepared so that a pore diameter PP1 at a maximum peak value v1 of a pore volume of large pores and a pore diameter PP2 at a maximum peak value v2 of a pore volume of small pores were values shown in Table 1. Table 1 shows values of "the pore diameter PP1", "the pore diameter PP2" and "(PP1-PP2)/PP1" of each of the honeycomb structures of Comparative Examples 1 to 7. Moreover, Table 1 shows "a pore volume ratio of the pore diameter smaller than PP2" of each of the honeycomb structures of Comparative Examples 1 to 7.

An SCR catalyst was loaded onto each of the honeycomb structures obtained in Comparative Examples 1 to 7, to prepare a honeycomb catalyst. An amount of the SCR catalyst to be loaded was 220 g/L similarly to Example 1. In Comparative Examples 1 and 2, the loading of the SCR catalyst was performed by using a catalyst slurry having a viscosity of 4 mPa•s. In Comparative Examples 3 and 4, the loading of the SCR catalyst was performed by using a catalyst slurry having a viscosity of 2 mPa•s. In Comparative Examples 5 to 7, the loading of the SCR catalyst was performed by using a catalyst slurry having a viscosity of 3.5 mPa•s.

(Conclusion)

As shown in Table 1, in the honeycomb catalysts using the honeycomb structures of Examples 1 to 13, an NO$_x$ purification ratio was high. This was supposedly because in the honeycomb catalysts using the honeycomb structures of Examples 1 to 13, the SCR catalyst was not filled into the small pores, the exhaust gas was therefore diffused in the partition walls through the small pores, and the SCR catalyst filled into the large pores further came in contact with the exhaust gas.

On the other hand, in the honeycomb catalysts using the honeycomb structures of Comparative Examples 1 to 4, an NO$_x$ purification ratio was low. In the honeycomb structures of Comparative Examples 1 and 3, a value of "(PP1-PP2)/PP1" was smaller than 0.91, and hence a difference in porosity between the large pore and small pore decreased. Therefore, when the SCR was loaded, the SCR catalyst was also filled into the small pores. Therefore, it is presumed that the exhaust gas was not easily diffused through the small pores and hence the NO$_x$ purification ratio decreased. Moreover, in the honeycomb structures of Comparative Examples 2 and 4, the value of "(PP1-PP2)/PP1" was in excess of 0.98, and hence the pore diameters of the small pores were so small that it was not possible to sufficiently promote the diffusion of the exhaust gas through the small pores.

Moreover, also in the honeycomb catalysts using the honeycomb structures of Comparative Examples 5 to 7, the NO$_x$ purification ratio was low. In Comparative Examples 5 and 6, a pore volume ratio of the pore diameter PP2 or less was in excess of 7%, and hence a volume of the large pores was relatively small. This was supposedly because the amount of the SCR catalyst to be filled into the pores decreased, and the NO$_x$ purification ratio decreased. Moreover, in Comparative Example 7, the pore volume ratio of pore diameter smaller than PP2 was smaller than 0.5%. Therefore, it is presumed that the small pores through which the exhaust gas was diffused decreased and hence the NO$_x$ purification ratio decreased.

Industrial Applicability

A honeycomb structure of the present invention can be utilized as a catalyst carrier onto which a catalyst for purification of an exhaust gas is loaded. A honeycomb catalyst of the present invention can be utilized to purify the exhaust gas.

Description of Reference Marks

1: partition wall, 2: cell, 3: outer peripheral wall, 11: one end surface, 12: other end surface, 14: pore, 15: large pore, 16: small pore, 21: catalyst slurry, 22: catalyst, 23: fluid, 60: SCR catalyst, 100: honeycomb structure, 200: honeycomb catalyst, 500: honeycomb structure, 501: partition wall, 502: cell, 514: large pore, 522: catalyst, 523: fluid, a: one distribution (one distribution in a graph illustrating a pore diameter distribution of the partition walls), b: other distribution (the other distribution in the graph illustrating the pore diameter distribution of the partition walls), PP1: pore diameter, PP2: pore diameter, v1: maximum peak value (the maximum peak value of the pore volumes of the one distribution), and v2: maximum peak value (the maximum peak value of the pore volumes of the other distribution).

**Claims**

1.  A honeycomb structure comprising porous partition walls with which there are formed a plurality of cells extending from one end surface to the other end surface to become through channels of a fluid,
    wherein in the partition walls, there are formed large pores which show one distribution in a graph illustrating a pore diameter distribution of the partition walls and in which a pore diameter PP1 at a maximum peak value of pore volumes of the one distribution is in a range of 12 $\mu$m to 60 $\mu$m, and small pores which show the other distribution in the graph illustrating the pore diameter distribution of the partition walls and in which a pore diameter PP2 at a maximum peak value of pore volumes of the other distribution is smaller than the pore diameter PP1,
    the pore diameter PP1 and the pore diameter PP2 satisfy a relation of the following equation (1), and
    a ratio of the pore volume of the pores having pore diameters smaller than the pore diameter PP2 to a total pore volume of the partition walls is 0.5% or more and 7% or less,

    $$0.91 \leq (PP1-PP2)/PP1 \leq 0.98 \quad ... \quad (1),$$

    in which PP1 is the pore diameter PP1 ($\mu$m) at the maximum peak value of the pore volumes of the one distribution, and PP2 is the pore diameter PP2 ($\mu$m) at the maximum peak value of the pore volumes of the other distribution.

2.  The honeycomb structure according to claim 1,
    wherein a thickness of each of the partition walls is from 50.8 to 254 $\mu$m.

3.  The honeycomb structure according to claim 1 or 2,
    wherein a cell density of the honeycomb structure is from 15.5 to 108.5 cells/cm$^2$.

4.  The honeycomb structure according to any one of claims 1 to 3,
    wherein a material of the partition walls contains at least one selected from the group consisting of cordierite, aluminum titanate, silicon carbide, and mullite.

5.  A honeycomb catalyst comprising:

    the honeycomb structure according to any one of claims 1 to 4; and
    an SCR catalyst which selectively reduces components to be purified.

6.  The honeycomb catalyst according to claim 5,
    wherein the SCR catalyst is a catalyst which selectively reduces nitrogen oxides.

**Patentansprüche**

1.  Wabenstruktur, umfassend poröse Trennwände, aus denen eine Vielzahl von Zellen ausgebildet ist, die sich von einer Endfläche zur anderen Endfläche erstrecken, um Durchgangskanäle eines Fluids zu werden,
    wobei in den Trennwänden große Poren, die eine Verteilung in einer graphischen Darstellung zeigen, die eine Porendurchmesserverteilung der Trennwände darstellt, und in der sich ein Porendurchmesser PP1 bei einem maximalen Spitzenwert von Porenvolumina der einen Verteilung in einem Bereich von 12 $\mu$m bis 60 $\mu$m befindet, und kleine Poren, welche die andere Verteilung in der graphischen Darstellung zeigen, welche die Porendurchmesserverteilung der Trennwände darstellt, und in der ein Porendurchmesser PP2 bei einem maximalen Spitzenwert von Porenvolumina der anderen Verteilung kleiner als der Porendurchmesser PP1 ist, ausgebildet sind,
    wobei der Porendurchmesser PP1 und der Porendurchmesser PP2 eine Beziehung der folgenden Gleichung (1) erfüllen, und
    wobei ein Verhältnis des Porenvolumens der Poren, die Porendurchmesser aufweisen, die kleiner als der Porendurchmesser PP2 sind, gegenüber einem Gesamtporenvolumen der Trennwände 0,5% oder mehr und 7% oder weniger ist,

    $$0{,}91 \leq (PP1 - PP2) / PP1 \leq 0{,}98 \quad ... \quad (1),$$

worin PP1 der Porendurchmesser PP1 ($\mu$m) bei dem maximalen Spitzenwert der Porenvolumina der einen Verteilung ist, und PP2 der Porendurchmesser PP2 ($\mu$m) bei dem maximalen Spitzenwert der Porenvolumina der anderen Verteilung ist.

**2.** Wabenstruktur gemäß Anspruch 1,
wobei eine Dicke von jeder der Trennwände von 50,8 bis 254 $\mu$m ist.

**3.** Wabenstruktur gemäß Anspruch 1 oder 2,
wobei eine Zelldichte der Wabenstruktur von 15,5 bis 108,5 Zellen/cm$^2$ ist.

**4.** Wabenstruktur gemäß einem der Ansprüche 1 bis 3,
wobei ein Material der Trennwände mindestens eines aus der aus Cordierit, Aluminiumtitanat, Siliziumkarbid und Mullit bestehenden Gruppe enthält.

**5.** Wabenkatalysator, umfassend:

die Wabenstruktur gemäß einem der Ansprüche 1 bis 4; und
einen SCR-Katalysator, der wahlweise zu reinigende Komponenten reduziert.

**6.** Wabenkatalysator gemäß Anspruch 5,
wobei der SCR-Katalysator ein Katalysator ist, der wahlweise Stickstoffoxide reduziert.


## Revendications

**1.** Structure en nid d'abeilles comprenant des parois de séparation poreuses avec lesquelles sont formées une pluralité de cellules s'étendant d'une première surface d'extrémité à l'autre surface d'extrémité pour devenir des canaux traversants d'un fluide,
dans laquelle dans les parois de séparation sont formés de grands pores qui montrent une première distribution dans un graphique illustrant une distribution de diamètre de pore des parois de séparation, et où un diamètre de pore PP1 à une valeur de pic maximum de volumes de pores de la première distribution est dans une plage de 12 $\mu$m à 60 $\mu$m, et de petits pores qui montrent l'autre répartition dans le graphique illustrant la distribution de diamètre de pore des parois de séparation et où un diamètre de pore PP2 à une valeur de pic maximum de volumes de pores de l'autre distribution est inférieur au diamètre de pore PP1,
le diamètre de pore PP1 et le diamètre de pore PP2 satisfont une relation de l'équation suivante (1), et un rapport du volume de pores des pores ayant des diamètres de pore inférieurs au diamètre de pore PP2 sur un volume de pores total des parois de séparation est de 0,5 % ou plus et de 7 % ou moins,

$$0{,}91 \leq (PP1-PP2) / PP1 \leq 0{,}98 \ldots (1),$$

où PP1 est le diamètre de pore PP1 ($\mu$m) à la valeur de pic maximum des volumes de pores de la première distribution et PP2 est le diamètre de pore PP2 ($\mu$m) à la valeur de pic maximum des volumes de pores de l'autre distribution.

**2.** Structure en nid d'abeilles selon la revendication 1,
dans laquelle une épaisseur de chacune des parois de séparation est comprise entre 50,8 et 254 $\mu$m.

**3.** Structure en nid d'abeille selon la revendication 1 ou 2,
dans laquelle une densité cellulaire de la structure en nid d'abeilles est de 15,5 à 108,5 cellules/cm$^2$.

**4.** Structure en nid d'abeilles selon l'une quelconque des revendications 1 à 3,
dans laquelle un matériau des parois de séparation contient au moins un matériau choisi dans le groupe comprenant la cordiérite, le titanate d'aluminium, le carbure de silicium et la mullite.

**5.** Catalyseur en nid d'abeilles comprenant :

la structure en nid d'abeilles selon l'une quelconque des revendications 1 à 4 ; et

un catalyseur SCR qui réduit sélectivement des composants à purifier.

6. Catalyseur en nid d'abeilles selon la revendication 5,
   dans lequel le catalyseur SCR est un catalyseur qui réduit sélectivement les oxydes d'azote.

FIG.1                                                    100

FIG.2

FIG.3

FIG.4

100

2

14 (15)

14 (16)

14 (16)

1

14 (15)

FIG.5

PORE VOLUME

PORE DIAMETER ($\mu$m)

FIG.6

FIG.7

FIG.8

502    500

514

522    522

501

523

514

523

FIG.9

FIG.10

FIG.11

FIG.12

FIG.13

200

2

14 (15)

14 (16)

14 (16)

100

60

60

1

14 (15)

**EP 2 638 947 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010516466 T
- EP 1985365 A1
- US 20080202080 A